# EUROPEAN PATENT APPLICATION

(11) **EP 4 394 542 A1**
(43) Date of publication of application: **03.07.2024**
(21) Application number: 22383317.9
(22) Date of filing: 30.12.2022
(51) Int. Cl.: G06F 1/16, G06F 3/01, A63F 13/28

(54) **WEARABLE ELECTRONIC STIMULI GENERATING DEVICE**

(71) Applicant: Boreal Technology & Investment S.L, 29003 Málaga (ES)
(72) Inventor: FUERTES PEÑA, Jose, 29018 Málaga (ES)
(74) Representative: Torner, Juncosa I Associats, SL

(57) **Abstract**

The wearable device of the invention hereby disclosed allows the user to feel the sensations, in such a way a deeply immersive experience is provided. The wearable device is a pair of sleeve or single sleeve where a series of electrodes have been strategically placed in such a way that every single muscle covered by the sleeve can be stimulated electrically by means of pulses generated by a control unit. The electrodes may be applied along with a conductive solution or conductive gel layer allowing a quick and easy fix on the skin of the user, providing a higher electrical conductivity as well.

## Description

### Technical field

The invention relates to the technical field of wearable devices and more particularly to wearable electronic devices.

The object of the invention is directed to a wearable device providing physical feedback to a user from an application.

### Background of the Invention

The world of video games has been surrounded by peripherals aimed for gaming since the very beginning. Joysticks were widely deployed in the 80s whereas haptic devices were becoming common during the 90s.

Haptic devices were, and still are, mainly based on mechanical based vibrating devices which generate a vibration by means of an electrically powered motor. These devices do not provide a real sensation or feeling of the situation currently being performed on the video game, since the haptic engine does stimulate the external part of the body only; hence any deeper action cannot be properly simulated, i.e., a stab in the stomach requires from a deeper perception rather than an external vibration or pulse on the abdominal area which can be either a punch or just low kick on the video game.

Hence, it was widely acknowledged that deeper sensations were meant to be provided for a real video game experience also applicable to any similar human-machine interaction.

In this sense, patent application EP3023867A2 discloses a method for interactive physiological and technological synchronization of a user with a virtual environment including taking the user's biometric and/or kinematic parameters, transferring the user's biometric and/or kinematic parameters to an application program, generating feedback signals in the application program, transmitting the feedback signals to a computing device, processing the feedback signals and supplying feedback pulses which invoke physical sensations in the nervous system of the user through contact with the user's skin, wherein the feedback pulses are supplied using electric pulses. The method disclosed by EP3023867A2 requires a prior taking the user's biometric and/or kinematic parameters which are transferred to an application program.

EP2291115B1 discloses a wearable device and system for a tamper free electric stimulation of a body; this device is mainly oriented to an application of Electrical muscle stimulation (EMS), also known as neuromuscular electrical stimulation (NMES) or electromyostimulation of a user's body which fits a portion of the user's body and includes at least one electrode embedded in the wearable device transferring a stimulating current to the user's body. The device of EP2291115B1 provides a connection point as an intermediate connection between the at least one electrode and a control unit configured to generate the stimulating current. In EP2291115B1 a detector is configured to detect if a change in a physical relationship between the connection point and the at least one electrode exceeds a predetermined threshold value, thereby enabling detection of misuse and tampering with the device.

US9293015B2 discloses a haptic drive circuit for an electrical muscle stimulation electrode which has an input for receiving a haptic signal based on a haptic effect from a haptic effects' processor. The drive circuit of US9293015B2 contains logic for generating an electrical muscle stimulation current based on the haptic signal; so, an electrode in contact with a user's skin receives the electrical muscle stimulation current, causing a haptic effect by contraction and relaxation of muscles near the electrode.

EP3182266A1 is aimed to determine a haptic effect and transmit a haptic signal associated with the haptic effect. The system disclosed in EP3182266A1 may also comprise a multifunction haptic output device configured to receive the haptic signal and output the haptic effect; said multifunction haptic output device may, in turn, comprise a single haptic actuator.

In this sense, EP3711829B1 discloses a wearable gaming device that can produce sensations on a user using said wearable gaming device, said sensations are produced by at least one pairs of electrodes generating electric pulses associated to a sensation, namely a bullet entering the body from the chest and leaving from the back. This requires two pairs or electrodes rendering a bulky device and a lot of energy needs to be provided by a battery which size is also conditioned by said feature since two pairs of electrodes per sensation are required.

### Description of the Invention

The present invention discloses a wearable electronic stimulus generating device for physically stimulating a user wearing said wearable device whilst playing a videogame, consuming multimedia content, or developing task in virtual environments such as the metaverse.

Thus, a first aspect of the present invention relates to a wearable device, preferably implemented on a piece of garment which is provided with a plurality of electrodes arranged so they can stimulate at least one muscle or groups of muscles in such a way they produce a sequence of electrically generated stimuli representing a certain sensation associated to an action being carried out whilst, for example, consuming multimedia content or playing a video game.

The object of the invention may generate stimuli, hence rendering sensations on a user, wearing the cited wearable electronic stimuli generating device, is mainly directed to simulating sensations by means of electrically stimulating at least one muscle of said user.

The object of the invention is carried out by means of the control unit generating a series of electric pulses which are directed to the electrodes. Said sensations are created by a control unit which may be furnished with a H bridge where the output channels are connected to.

The object of the invention provides any type of wave and even move away from the preestablished waves known in the art, being able to generate signals in need of being located within the known standards. That is, this feature allows us to deviate from the traditional waves, the control unit may generate biphasic quadrangular, preferably symmetric, waves producing pulse/s so the muscle can be stimulated without the need for repetitions within a wave, that is, by means of an asynchronous impulse train.

Thanks to the possibility of being able to stimulate at least one muscles at the (virtually) the same time, the invention can generate impulse trains in one or more muscles. For this an asymmetric and multiform wave may be applied on each muscle where the pulse/s related to the sensation are received, and with different depth and time, being able to create a more real sensation by being able to stimulate one or more muscles at the same time.

Contrary to known devices, the object of the invention can generate different electric pulses related to respective physical sensations. Said electric pulses being respectively transmitted to the user in what is considered real time; this a time windows comprised below 50 ms since a physical sensation related event is produced in the virtual content (video game, VR, metaverse, virtual training, etc). A pulse time below 50ms is the time that is considered the user perceives through the sense of touch, as immediate between a trigger event such as what you are perceiving using other senses, for instance hearing or sight, and what you are feeling by means of your sense of touch. The different sensations are created thanks to electric pulses generated with nine parameters available for the configuration of at least one electric pulse, hereinafter associated electric pulse. These parameters may be listed as follows:
- Frequency (Hz): number of pulses (positive and negative) per second.
- Duration (ds): Total duration of the train of pulses generation
- Resting time (ds): Rest time between this train of pulses and the next one.
- Ramp up (ms): Time from the first pulse to reach the maximum programmed intensity level.
- Rap down (ms): Time to reach the maximum programmed intensity level to the last pulse.
- Pulse width (us): time programmed for the positive and negative pulse width.
- Interphase (us): Time programmed between the positive and negative pulse.
- Intensity (mA): Level of intensity of the train of electric pulse programmed.
- Channel number (muscle): muscle/s where the user will feel the sensation.

Each configuration of these nine parameters together forms what we call a micro-sensation which is perceived by the user when received the associated electric pulse. A sensation can be composed of a micro-sensation or combine several micro-sensations with various configurations of the nine parameters to create more complex sensations.

These configurations of sensations are the ones that will be programmed in the above-mentioned virtual content that the user will be using (film, video game, metaverse, VR, etc.). In real time, the user will feel the sensations that he will be seeing and hearing.

In an alternative embodiment of the invention the piece of garment of the invention may comprise at least one sensor arranged in any part of the circuit being wired to the control unit or wirelessly connected; said sensor may capture data form the user body, said data being related to: movements, temperature, heart rate, blood pressure or any other related parameter that can be used by the control unit to modify the electric pulses to be generated or maybe to be sent to the multimedia content provider devices or producer.

Throughout this document the term cable is referred to a specific type of cable, this should be taken an indication of the preferred type of cable used, but the object of the invention is operative regardless of the type of cable as long as it provides electric conductivity, and it is suitable to transfer the electric pulses from the central unit to the electrodes.

It is worth noting that in any embodiment of whichever aspect of the present invention the word "conductor" and/or "conductive" is irrespectively used referring to physical properties related to electrical conductivity σ.

### Brief description of the Figures

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figs.1a-1b.- 1a: Shows the wearable device of the invention embodied as a pair of sleeves, so the different parts of its configuration can be appreciated specially the elastic bands and the cable showing the outer electrically insulating structure, and a conductive elastic core comprising in turn an elastic structure covered with the conductor layer. 1b: Shows the wearable device of the invention embodied as one single sleeve.

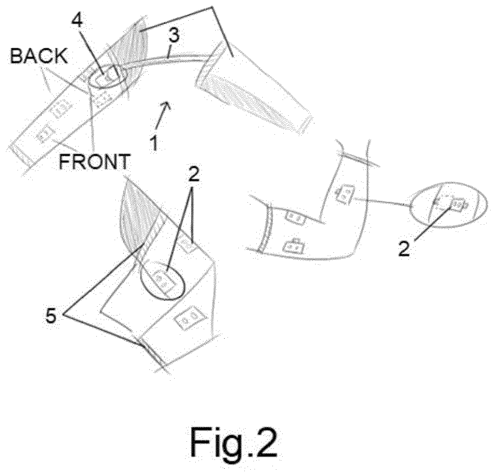

Fig.2.- Shows different views of the garment of the invention in the form of a pair of sleeves depicting front and rear parts as well as the wired connection between the two sleeves.
Figs.3a-3b.- 3a: Shows a cross section view of the cable where the main parts are displayed therein. 3b: Shows an aerial view of the partially unshielded cable where the inner filamentary structure is displayed.
Fig.4.- Shows a graph of the biphasic quadrangular and preferably symmetric waves that can be generated by the control unit.

### Detailed Description of the Invention and of particular embodiments

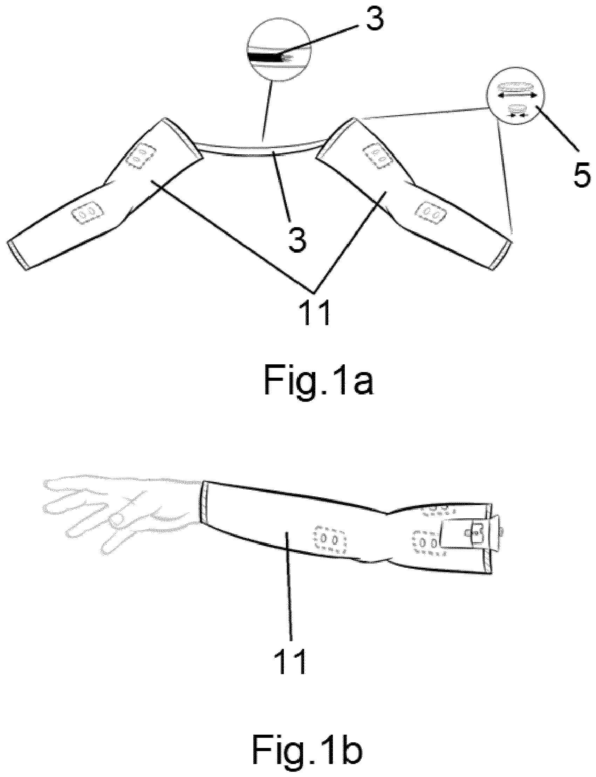

In a preferred embodiment of the object of one aspect of the invention, a wearable device (1) presented as a piece of garment defined by one sleeve (11) or a pair of sleeves (11) is provided with a set of at least one pair of electrodes (2) being connected, preferably by a cable (3), to a control unit (4) is presented; all of these, rendering the wearable device (1) as the one depicted on Figs.1a-1b. It is worth noting that, said sleeves (11) may be wired or wirelessly interconnected.

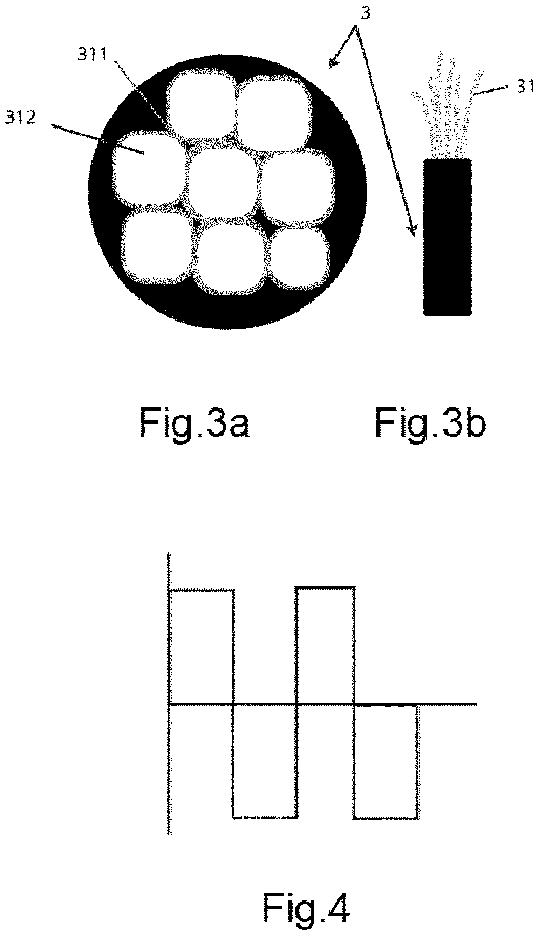

The cable (3) comprises an outer electrically insulating structure (33), and a conductive elastic core (31) comprising in turn an elastic structure (312) covered with an electrical conductor layer (311) configured to be electrically connected to a conductive layer (22) of the electrode (2), which may be covered by an electrically conductive gel layer (21) which may be a part of the electrode (2) as shown on Fig.3, in a more preferred embodiment of the invention the electrode (2) does not comprise the electrically conductive gel layer (21); instead a layer of conductive solution or gel may be applied to the skin before wearing the wearable device (1) of invention since said wearable device (1) may be defined by the sleeve (11) or pair sleeves (11) arranged in such a way that the electrode (2) is in close contact with the skin compressing the body (arm in this case) hence the conductive gel layer (21) would grim the use of the wearable device (1) since the conductive gel layer (21) would be sticky and would hinder the process of putting on/off the wearable device (1) especially when embodied as a pair of sleeves (11) as in Fig.1.

The core of the cable (3), referred as a preferably elastic cable (3) may comprise a series of elastic structures (312), which can be made of elastomer filaments capable of stretching 160% of its length at rest, covered with enamelled copper wire thus defining the electrical conductor layer (311), preferably arranged in the form of zigzag to allow it to be stretched in conjunction with the elastomers so that the user has extreme comfort at the same time that the quality of the electrical signal sent does not suffer losses during the way to go through the wearable device (1), in a preferred embodiment of the invention an elastic cable (3) with the following specification is preferred:
- 18.86% Elastomer
- 47.44% Enamelled copper wire.
- 33.70% Black textured polyamide thread.
- Elasticity: 160%
- Footage: 606 meters / kg

The conductive elastic core (31) is covered by the outer electrically insulating structure (33), which may comprise textured polyamide wire/s and provides the structural function and to which an insulating additive might added so that it does not allow the transmission of electric current.

This cable (3) structure depicted on Figs.3a and 3b, comprising the outer electrically insulating structure (33), and conductive elastic fibres (31) comprising in turn an elastic structure (312) covered with a conductor layer (311) connecting to the conductive layer (22) of the electrode (2), allows that there is no leakage of electric current. Besides, and thanks to its elasticity, it adapts to the body once stitched to the piece of garment, preferably by means of an embroidery machine; hence, once the cable is fixed to the piece of garment, it always remains placed at a fixed position relative to the piece of garment, but at the same time, the already discussed cable (3) structure provides the required elasticity consistent with that of the material that makes up the piece of garment, i.e. Lycra ^{®}. The elastic cable (3) runs through the structure of the piece of garment from a connection of the control unit (4) to each of the electrodes (2) of the wearable device, preferably twenty electrodes (2) being wired at each pair of electrodes (2), in a preferred embodiment the cable (3) may be attached to the control unit (4) by means of a, preferably magnetic pin - not represented in the figures- of the control unit (4). By means of an embroidery machine the cable (3) is inserted through each of the paths defined inside the piece of garment so that the connection between the magnetic input of the control unit (4) and the electrodes (2) sewn to the jacket can be fully connected.

The connection of the cable (3) to the electrically conductive layer (22) made of conductive black carbon, will preferably occur by electrical contact of at last the conductor layer (311) of the cable (3) along the perimeter of said electrically conductive layer (22); hence the end of the cable (3) is properly prepared so that it provides high conductivity.

In a preferred embodiment of the object of the invention and as a way of exemplifying the invention, the user playing a video game has a corresponding game character shooting a firearm or an arrow, for this to be achieved, the object of the invention envisages by means of the control unit (4) a set of sensations associated thereof.

In order to provide such sensation, the wearable device (1) comprising the piece of garment, the electrode (2) connected by the cable (3) to the control unit (4), is worn by the user playing a video game in such a way that, said electrode (2) being arranged at the piece of garment, stimulates at least one muscle of said user wearing the piece of garment related to those being involved in the aforementioned sensation when being shot as described; in order to do so the control unit (4) comprises information of each electrode (2) said information encompassing its position and the relative position of the electrode (2) with respect of the body of user, therefore to which muscle or muscles affects each electrode (2) or groups of electrodes (2) being configured to generate an electric pulse commanded by the control unit (4) in response to an action occurring at the videogame play. Once the control unit (4) generates a pulse or group of pulses, said pulse is transmitted through the cable (3) - more precisely through the conductive elastic fibres (31) comprising the elastic structure (312) covered with the conductor layer (311) - reaching the muscle associated to the position of the electrode (2) is stimulated in an specific way signifying the sensation respectively produced by the action occurring to a respective character during the videogame play.

Thus, in the current scenario related to the non-limitative explanatory embodiment of the object the invention where the user is playing a FPS videogame where a bullet is shot and the character is hit.

In a yet preferred embodiment, the control unit (4) of the wearable device (1) comprises a processing unit being capable of generating different types of waves, being biphasic quadrangular, and preferably symmetric, waves that can be generated by the control unit (4). In a preferred embodiment of the invention the control unit (4) may be furnished with one H shaped bridge respectively associated with at least a pair of output channels, with the purpose of generating pulse/s which can be sent as stimuli to two or more muscles at the same time, making the sensations perceived by the user wearing the object of the invention as real as possible. As the skilled person would acknowledge, this can be achieved because the object of the invention yields a type of wave that does not require from adapting to a preestablished frequency type of wave (periodicity). The number of channels and bridges can be modified whilst keeping the symmetry of the output channels.

In a preferred embodiment of the invention only biphasic quadratic waves are generated, this allows a lower energy consumption and lower hardware requirements. This is quite important since this feature allows longer working hours and yields smaller sizes for both energy sources and control unit (4).

The variables used to create the sensations are grouped as tracks; being a train a set of tracks previously designed and resulting in a respective sensation; each track comprises one or more pulses, preferably with identical wave characteristics that, properly ordered, form the pulse train. Those related for a machine gun recoil may be listed as follows:

### - Sensation 1. (Machine Gun Recoil)

### Track 1:

Channel Number: 8 (right forearm muscle) + 9 (left forearm muscle) + 4 (right biceps muscle) + 5 (left biceps muscle)
Frequency: 10 Hz
Duration: 20 ds
Resting time: 0 ds
Ramp up: 0
Rap down: 0
Pulse width: 300us
Interphase: 50us
I (Intensity): 50%, 50%, 100%, 100%.

In this case, the sensation is sent to the four areas using the multiplexity system, feeling the sensation as it were sent at the same time. This sensation is dynamic in duration, it means, it is sent every 1 second to the device until the user stops shooting.

### - Sensation 2 (Draw bowstring)

### Track 1:

Channel Number: 8 (right forearm muscle) + 4 (right biceps muscle)
Frequency: 100 Hz
Duration: 10 ds
Resting time: 0 ds
Ramp up: 0
Rap down: 0
Pulse width: 300us
Interphase: 50us
I (Intensity): 40% and 90% (variable)

The sensation is sent to right forearm muscle and right biceps muscle using a multiplexity system. The user feels this sensation in both muscle groups as it were sent at the same time. Each group has different intensity level. The sensation is dynamic in intensity and duration, it means, it is sent continuously from the virtual environment, updating the intensity depending on the bowstring drawing amount.

In an alternative embodiment of the invention the piece of garment (1) of the invention may be furnished with elastic bands and the end of the sleeve (11), wherein said elastic bands may comprise electrodes (2) and /or the cable (3).

## Claims

1. Wearable electronic stimuli generating device comprising piece of garment (1) with at least one pair of electrodes (2) connected to a control unit (4), said pair of electrodes (2) being arranged in such a way that at least one muscle of a user wearing the piece of garment (1) is stimulated when the pair of electrodes (2) generate at least one electrical pulse commanded by the control unit (4), wherein said at least one electric pulse is received by the at least one muscle in a time comprised below 50 ms from a trigger event produced in a virtual environment perceived by the user.

2. Wearable electronic stimuli generating device according to claim 1, wherein the piece of garment comprises is a pair of sleeves (11), said sleeves (11) being wirelessly interconnected.

3. Wearable electronic stimuli generating device according to claim 1, wherein the piece of garment is a sleeve (11).

4. Wearable electronic stimuli generating of any one of the preceding claims, wherein the control unit (4) is connected to the pair of electrodes (2) by a cable (3) comprising in turn a conductor layer (311) made of enamelled copper wire arranged in zigzag to allow it to be stretched in conjunction with an elastic structure (312).

5. Wearable electronic stimuli generating device of any one of the preceding claims, wherein the electrodes (2) are arranged in pairs.

6. Wearable electronic stimuli generating device of any one of the preceding claims, wherein the control unit (4) comprises one H shaped bridge with respective group of output channels where the control unit (4) is connected to.

7. Wearable electronic stimuli generating device of any one of the preceding claims further comprising elastic bands (5) and the end of the sleeve (11), wherein said elastic bands (5) comprise in turn at least one pair of electrodes (2).

8. Wearable electronic stimuli generating device of any one of claims 4 to 6, further comprising elastic bands (5) and the end of the sleeve (11), wherein said elastic bands (5) comprise the cable (3).

9. Wearable electronic stimuli generating device of any one of the preceding claims, further comprising a sensor capable of sensing at least one of: heart rate, temperature and motion.
